Europäisches Patentamt

European Patent Office

Office européen des brevets

(19)

(11) **EP 0 448 448 B1**

(12) **FASCICULE DE BREVET EUROPEEN**

(45) Date de publication et mention
de la délivrance du brevet:
**14.01.1998 Bulletin 1998/03**

(51) Int Cl.[6]: **G06F 7/52**

(21) Numéro de dépôt: **91400700.0**

(22) Date de dépôt: **14.03.1991**

(54) **Procédé pour calculer l'inverse d'un nombre et calculateur pour la mise en oeuvre dudit procédé**

Verfahren zur Berechnung des Inversen einer Zahl und Rechner zur Ausführung dieses Verfahrens

Method for calculating the inverse of a number and calculator to implement said method

(84) Etats contractants désignés:
**DE ES FR GB IT NL SE**

(30) Priorité: **21.03.1990 FR 9003605**

(43) Date de publication de la demande:
**25.09.1991 Bulletin 1991/39**

(73) Titulaire: **BULL S.A.**
**78430 Louveciennes (FR)**

(72) Inventeurs:
• **Keryvel, Georges**
**F-78000 Versailles (FR)**

• **Thomas, Jean-Louis**
**F-92140 Clamart (FR)**

(74) Mandataire: **Colombe, Michel et al**
**Direction de la Propriété Intellectuelle BULL SA**
**Poste courrier:LV 59C18**
**68 route de Versailles**
**78430 Louveciennes (FR)**

(56) Documents cités:
**EP-A- 0 149 248          US-A- 4 482 975**

• **IBM TECHNICAL DISCLOSURE BULLETIN, vol. 26, no. 3B, août 1983, pages 1537-1539, New York, US; C. GALAND: "Fast division"**

**Description**

La présente invention concerne un procédé utilisable dans les calculateurs numériques pour calculer l'inverse d'un nombre.

Le calcul de l'inverse d'un nombre trouve une application intéressante dans l'opération division notamment en virgule flottante. En particulier le résultat de la division de deux nombres est obtenu par simple multiplication du dividende par l'inverse du diviseur.

Habituellement, la division ou le calcul de l'inverse I d'un nombre D est obtenu à partir de méthodes répertoriées en deux groupes principaux:

- les méthodes par soustractions et décalages successifs,
- les méthodes itératives, en général basées sur l'algorithme de Newton, selon l'équation récurrente:

$$In+1 = In \times (2-(D \times In)),$$

In convergeant vers I.

En pratique les méthodes par soustractions et décalages ne permettent d'obtenir à chaque étape que un ou deux bits significatifs additionnels. Elles nécessitent donc des circuits opérateurs volumineux, en général lents et peu intégrables.

Les méthodes itératives sont en général préférées pour les calculateurs scientifiques pour lesquels la performance de l'opération de division est primordiale. La méthode de Newton appliquée à des nombres normalisés permet de doubler la précision du résultat à chaque itération. Toutefois, chaque opération nécessite deux multiplications réalisées en séquence et, par là même, non parallélisables. Par ailleurs, afin de réduire le nombre d'itérations, on utilise généralement des tables d'inverse pour obtenir la valeur de départ de l'itération. Dans ce cas, la précision de la valeur de départ est limitée par la taille physique de la table d'inverse, celle-ci nécessitant $2^{n-1}$ entrées si l'incrément i de la table est choisi égal à $2^{-n}$, pour une précision de l'ordre de $2^{-2n}$, soit 2n bits significatifs.

IBM-TDB, vol. 26, NO. 3B,8/83, pages 1537-1539, Galand, divulge une procédure pour approximer l'inverse d'un nombre D, comportant les opérations suivantes :

a) Normaliser D
b) Rechercher, dans une table, à partir des bits de poids fort de D, une première approximation
c) Rechercher, dans une table, à partir des bits de poids fort de D, un gradient
d) Calculer l'approximation par la somme de la première approximation et le produit du gradient et les bits de poids faible de D

La présente invention propose une nouvelle méthode de calcul d'inverse qui permet d'éliminer les inconvénients présentés ci-dessus ou d'en atténuer les effets, et qui favorise l'intégration des opérateurs en réduisant le nombre et la taille des circuits.

Plus particulièrement, l'invention propose un procédé pour approximer l'inverse I d'un nombre D, comportant les opérations suivantes :

a) - Le cas échéant, mise sous forme binaire et normalisation du nombre D,
b) - Recherche, dans une table d'inverse T1, à partir des n premiers bits de poids fort de D correspondants à une valeur d'entrée $Xj = 1/2 + (j \times 2^{-n})$ avec j entier de 0 à $2^{n-1}-1$, d'une première approximation Io de l'inverse du nombre D,
c) - Recherche, dans une table d'écart T2, à partir de Xj du gradient d'écart d'inverse $Go = \Delta Io/i$ dans l'intervalle $ij = [(Xj), ((Xj)+i)]$ encadrant la valeur D, avec $i = 2^{-n}$,
d) - Détermination, par approximation linéaire, d'une deuxième valeur I1 par mise en oeuvre de l'algorithme : $I1 = Io + (d \times Go)$ où les m bits suivants les n bits de poids fort de D correspondent: à $d = D - Xj$ et Go est rentré en valeur algébrique,
e) - Recherche, dans une table de correction T3, à partir de d, d'une valeur de correction de base CB1 préétablie, signée ou non, représentative de l'écart $E = I - I1$ dans une intervalle $iB = [(Xjb), ((Xjb)+i)]$ donnée,
f) - Recherche dans une table d'échelle T4 d'un facteur d'échelle Hj à partir de Xj,
g) - Détermination d'une valeur de correction $Cjl = CBl \times Hj$,
h) - Détermination d'une troisième approximation $I2 = I1 + Cjl$.

Ainsi donc, le principe de l'invention est basé sur l'application d'une correction complémentaire à une approximation I1 obtenue par approximation linéaire à partir d'une première valeur Io elle-même obtenue à partir d'une table d'inverse. La valeur de la correction est obtenue à partir de données préétablies mémorisées dans des tables de dimensions réduites. Il est ainsi possible, dans un premier temps, sans avoir recours à la méthode itérative de Newton, d'obtenir des inverses de précision appréciable (28 bits) à partir de tables de tailles facilement intégrables.

Selon une première variante du procédé selon l'invention, le procédé comporte de plus l'opération de mise en oeuvre de la méthode itérative de Newton dans laquelle la kième itération est donnée par l'algorithme:

$$INk = (IN(k-1)) \times (2-(D \times (IN(k-1)))) \text{ avec } INo = I2.$$

Selon un autre aspect de l'invention, l'entrée de la table de correction T3 est réalisée à partir des m bits suivants les n bits de poids fort de D et en ce que $CBl = I((Xjb)+(l \times 2^{-m-n})) - I1((Xjb) + (1 \times 2^{-m-n}))$ pour $1 \times 2^{-m-n} \leq d < (l+1) \times 2^{-m-n}$ avec l entier compris entre 0 et $2^m$-1 . Avantageusement Hj dans la table T4 est donné par la formule $Hj= (Xjb/Xj)^3$. Cet agencement des deux tables T3 et T4 permet un gain sensible du point de vue taille des opérateurs par rapport à une table de correction équivalente délivrant directement à sa sortie la valeur Cjl.

Le procédé selon l'invention est particulièrement adapté à la réalisation des unités de calcul scientifique en variables flottantes des processeurs d'un calculateur numérique tel qu'un calculateur vectoriel.

Aussi l'invention concerne également un calculateur numérique pour la mise en oeuvre du procédé proposé ci-dessus, comportant dans au moins un de ses processeurs:

- des moyens pour la mise en forme binaire et la normalisation du nombre D,
- une table d'inverse T1 adressée en fonction des n bits de poids fort du nombre D et de sortie Io,
- une table de gradient d'écart T2 adressée en fonction des n bits de poids fort du nombre D et de sortie Go,
- un circuit multiplieur M1, de sortie S1 et dont l'entrée-multiplicateur reçoit au moins m bits suivant les n bits de poids fort de D et l'entrée-multiplicande reçoit Go;
- une table de correction T3 adressée en fonction des m bits suivant les n bits de poids fort de D et de sortie CB1,
- une table d'échelle T4 adressée en fonction des n bits de poids fort du nombre D et de sortie Hj,
- un second circuit multiplieur M2 dont les entrées reçoivent CBl et Hj et de sortie Cjl,
- des moyens d'addition A1, A2 à trois entrées recevant Io, S1 et Cjl, et de sortie I2.

Avantageusement, une variante du calculateur selon l'invention, est caractérisée en ce que la table T2, le multiplicateur M1 et les moyens d'addition A1, A2 travaillent sur des opérandes signés. Il est ainsi possible de gagner encore au moins 1 bit de précision.

D'autres avantages et caractéristiques de l'invention apparaîtront à la lecture de la description qui va suivre et qui se réfère aux dessins ci-annexés dans lesquels :

- la figure 1 est une représentation schématique fonctionnelle du procédé selon l'invention,

- la figure 2 est une représentation schématique des courbes Y(X) = 1/X, Cj et CSj dans l'intervalle (0,5; 1),

- la figure 3 est une représentation schématique agrandie des courbes Y(X) et Cj de la figure 1 dans l'intervalle ij= [Xj, ((Xj)+i)],

- et la figure 4 est une représentation schématique d'un dispositif pour la mise en oeuvre dans un calculateur numérique du procédé selon l'invention.

D'une façon générale, l'invention est applicable au calcul d'inverse de nombres, en format fixe ou flottant, dont la précision est limitée par la dimension du format utilisé par le calculateur. Dans le cas d'un nombre en format flottant, l'invention est applicable directement au calcul de l'inverse de la mantisse de ce nombre.

Bien entendu, dans le cadre d'une unité de calcul scientifique qui comporte toujours un multiplieur, le calcul des inverses selon l'invention permet d'effectuer les divisions sans modifications supplémentaires.

Il est à noter que tous les calculs d'inverse se ramènent au calcul de l'inverse d'un nombre en format fixe ou d'une mantisse (dans le cas d'un format flottant) mis en forme binaire et normalisés en base 2 (le bit de poids fort étant alors égal à 1), et dont la valeur décimale est en conséquence comprise entre 0,5 et 1. En effet, toutes les autres manipulations sont des multiplications ou divisions par une puissance de 2 par l'intermédiaire d'opérations de décalage. Ces opérations de mise en forme binaire, de normalisation et de décalage sont classiques et ne seront pas décrites plus en détail par la suite. Il en est de même pour les moyens et circuits de mise en oeuvre de ces opérations dans un calculateur numérique. Ainsi donc, la première opération à réaliser dans le cadre du procédé selon l'invention, est la mise en forme binaire et la normalisation du nombre concerné si cette opération n'a pas été effectuée préalablement.

Dans la présentation qui va suivre, donnée à titre d'exemple non limitatif de l'invention, le nombre D dont on se propose de calculer l'inverse I, sera choisi comme la mantisse d'un nombre flottant mise en forme binaire et normalisée. En particulier, les formats flottants utilisés dans les calculateurs scientifiques sont de 32 bits (flottant court) ou de 64 bits (flottant long), avec des mantisses de 24 bits et 56 bits respectivement.

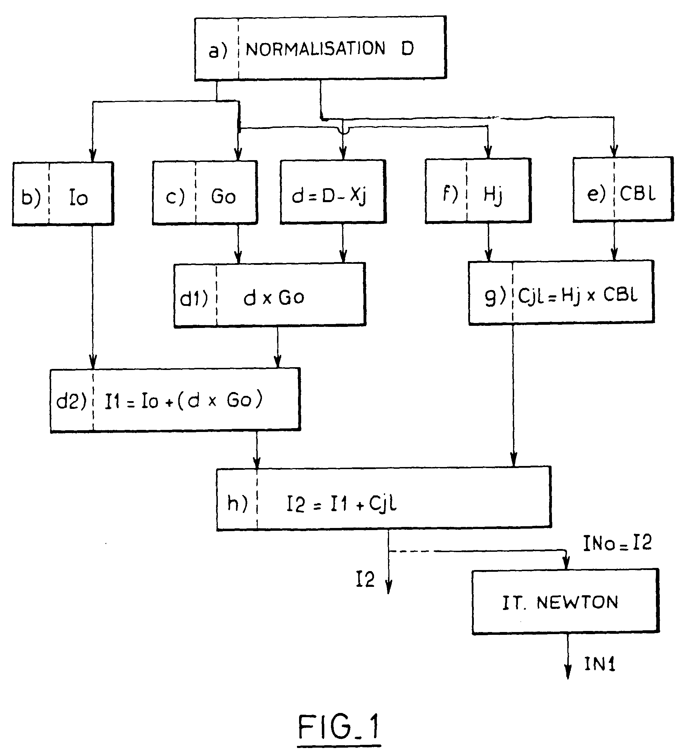

La figure 1 représente le schéma fonctionnel de principe du procédé selon l'invention dans lequel chaque opération est présentée par sa lettre de référence de a) à h) :

a) - Normalisation de D

b) - Détermination de Io (à partir de a))

c) - Détermination de Go (à partir de a))

d1) ( Calcul de d x Go avec d = D-Xj (à partir de a) et de c))

d2) - Calcul de I1 = Io + (d x Go) (à partir de b) et de d1))

e) - Détermination de CB1 (à partir de a))

f) - Détermination de Hj (à partir de a))

g) - Calcul de Cjl = Hj x CB1 (à partir de e) et f))

h) - Calcul de I2 = I1 + Cjl (à partir de d2) et h)).

De plus, selon une variante du procédé de l'invention, I2 est utilisée comme valeur de départ INo d'une itération selon la méthode de Newton et de résultat IN1.

La description qui va suivre apportera des précisions sur la définition de chaque symbole utilisé et sur le déroulement de chaque opération. Toutefois, le chaînage des opérations illustré à la figure 1 montre que l'approximation I2 peut être obtenue sans itération bouclée et que certaines opérations, par exemple le groupe e), f) et g), peuvent être effectuées en parallèle, par exemple en utilisant une architecture dite "pipe-line", avec les opérations du groupe b), c), d1) et d2). Cette structure fonctionnelle est en particulier avantageuse du point de vue rapidité du calcul.

Soit à calculer I = 1/D avec $0,5 \leq D < 1$ où I et D sont des valeurs de précision finie "p" définie par le format flottant utilisé. D a la forme binaire suivante :

$$D = 0,1 \, a_2 \, ...... \, a_p \, .$$

L'inverse de D aura alors la forme binaire suivante:

$$I = 1/D = 1,b_1 \, .... \, b_p \text{ avec } 1 < I \leq 2$$

$$\text{et } I = 10,000 \, ... \, 0 \text{ pour } D = 0,100 \, ... \, 0 \, .$$

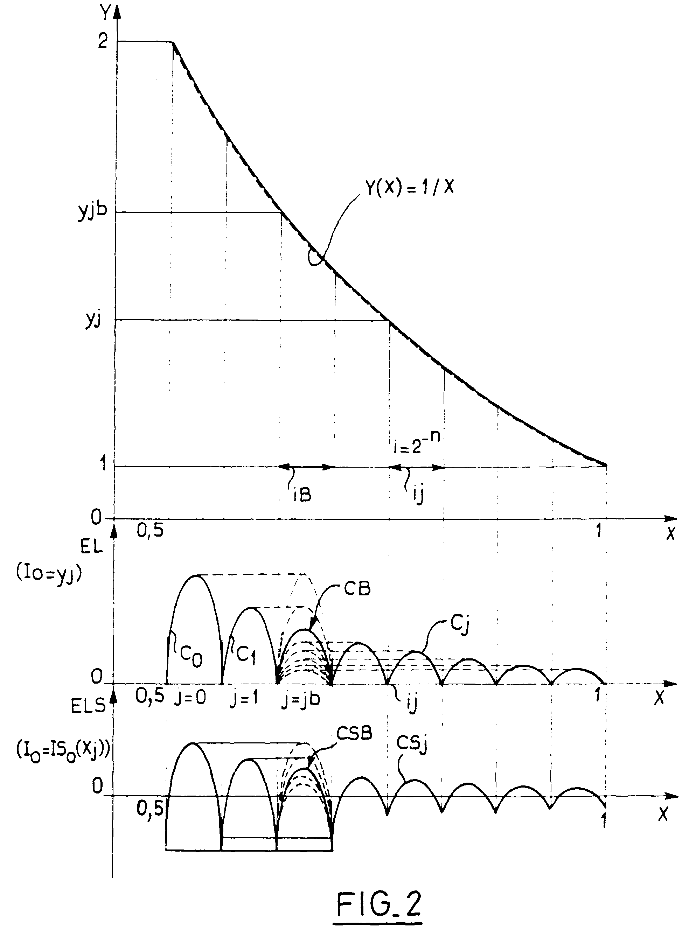

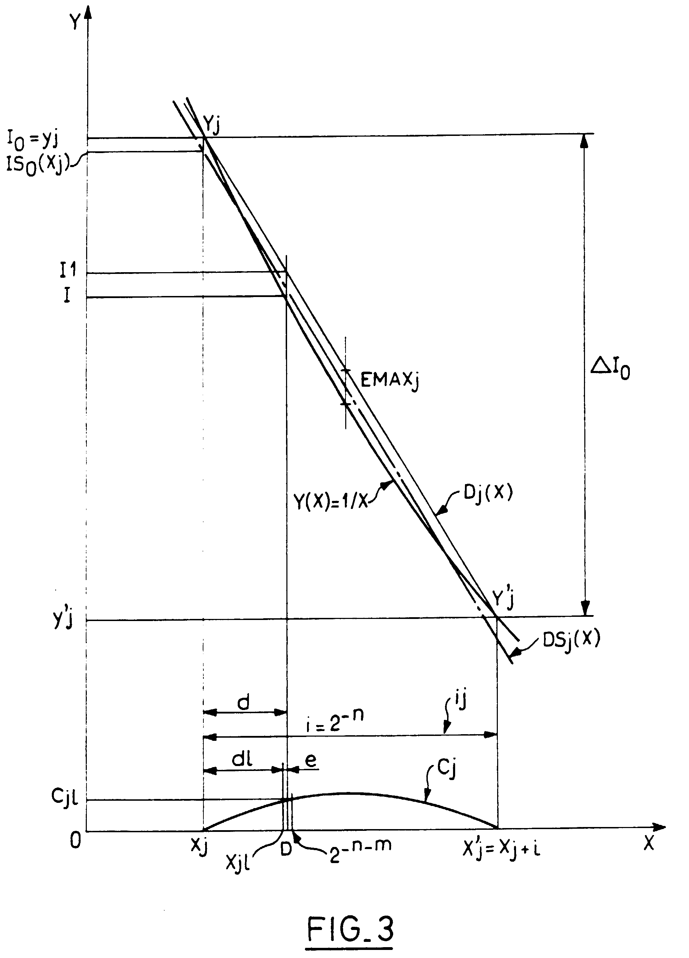

Cette valeur appartient à la courbe $Y(X)=1/X$ représentée à la figure 2. Cette courbe est divisée dans l'intervalle 0,5 et 1 en $2^{n-1}$ segments, chaque intervalle ij (de dimension $i = 2^{-n}$) correspondant à l'une des $2^{n-1}$ entrées Xj d'une table d'inverse T1 donnant une première approximation Io de l'inverse de D. La figure 3 montre une représentation agrandie d'un intervalle ij= [Xj, (Xj)+i] de la figure 2, étant entendu que les courbes présentées sur ces deux figures ont été volontairement déformées pour les rendre plus lisibles.

Définitions :

Dans la suite de la description, on utilisera les diverses représentations symboliques suivantes définies ci-après :

\* Xj

La valeur d'entrée Xj dans la table T1 est donnée par l'expression $Xj = 0,5 + (j \times 2^{-n})$ avec j entier de 0 à $2^{n-1}-1$. La valeur de Xj est choisie immédiatement inférieure à D avec $Xj \leq D < X'j=(Xj)+i$.

Xj correspond donc aux n premiers bits de poids fort de D. En fait seuls les n-1 bits de rang 2 à n après la virgule (le bit de rang 1 étant toujours égal à 1 après normalisation) sont utilisés pour adresser la table T1. Pour des raisons qui apparaîtront ultérieurement, la valeur de sortie Io de T1 doit être donnée avec la précision n + m à laquelle est ajouté un nombre g de bits de garde. Ces bits de garde g sont utilisés pour assurer le maintien de la précision au cours des calculs intermédiaires.

Sauf indication particulière, on prendra pour la suite $lo = yj = 1/Xj$.

\*   d.

Le déplacement d utilisé dans l'approximation linéaire pour le calcul de l1 est donné par l'expression $d = D-Xj$ avec $0 \leq d < i$.

La variable d est exprimée en binaire par les p-n bits suivant les n premiers bits de poids fort de D. Toutefois, lorsque la précision finale du calcul de l2 est inférieure à p, la valeur de d est tronquable à m+g (ce qui donne à d la valeur arrondie $d = D-Xj-\varepsilon$). On néglige ainsi la valeur résiduelle des bits de poids faible qui n'interviendront pas dans le calcul de l2. Par contre ces bits seront utilisés pour calculer l (par l'algorithme de Newton par exemple) si la précision obtenue pour l2 compte tenu de la taille des tables utilisées est insuffisante; cette situation se rencontre pour le calcul d'inverses en format flottant long.

\*   Go

L'écart $\Delta$ lo entre deux valeurs successives de yj, $yj = 1/Xj$ et $y'j = 1/((Xj)+i)$ permet de calculer le gradient d'écart d'inverse $G_o = \Delta$ lo/i dans l'intervalle $ij= [Xj, (Xj)+i]$ . Ce gradient d'écart Go est donné par une table T2 avec la précision n+m+g à partir des mêmes entrées utilisées pour la table T1.

\*   Cjl

La valeur de la correction complémentaire Cjl à apporter à l1 pour obtenir l'approximation l2 dépend de l'intervalle ij considéré et de d. Pour ce faire, chaque intervalle ij est partagé en $2^m$ segments de dimension $2^{-n-m}$. Il est ainsi possible de tracer dans l'intervalle ij la courbe $Cj = Dj(X) - Y(X)$ pour chaque valeur de $Xjl = Xj + (lx2^{-n-m})$ avec l entier de 0 à $2^m-1$. Cette courbe représente l'écart entre la courbe d'inverse Y(X) et la corde Dj(X) (soit la droite YjY'j) sur l'intervalle $ij= [Xj, ((Xj)+i)]$. Une fois la courbe Cj obtenue, la valeur de la correction associée à d est donnée par $Cjl = Cj (Xjl)$ pour $l \times 2^{-n-m} \leq d < (l+1) \times 2^{-n-m}$.

Le déplacement $dl = Xjl - Xj$ est exprimé en mode binaire par le contenu des m bits suivant les n premiers bits de poids fort de D, étant entendu que m < (p-n).

La figure 2 montre une représentation de la série des courbes Cj pour les divers intervalles $ij= [Xj,(Xj)+i]$ entre 0,5 et 1. Bien évidemment, il est théoriquement envisageable de prévoir une table de correction donnant immédiatement pour chaque valeur de Xjl la valeur de correction à appliquer. Toutefois, la taille physique ($2^{n+m-1}$ entrées) d'une telle table n'apporte qu'un faible avantage de taille par rapport à une table d'inverse structurée sur des intervalles de dimension $2^{-n-m}$.

Une des caractéristiques essentielles de l'invention consiste à tirer parti de l'affinité apparente des diverses courbes Cj (d'allure parabolique) pour déduire toutes ces courbes Cj à partir d'une courbe de base CB par simple multiplication avec un facteur d'échelle Hj représentatif du segment ij concerné. La taille de la table de correction directe équivalente à l'agencement des tables T3 et T4 aurait été $2^{n-1}$ fois celle de la table T3. Sur la figure 2, la courbe de base CB=Cjb est donnée, à titre d'exemple, pour le 3ème segment à partir de la gauche soit iB pour jb=2. La courbe CB est mémorisée dans une table T3 dont les entrées (au nombre de $2^m$) sont adressées par les m bits de poids faible de Xjl et dont la sortie CBl est donnée avec la précision recherchée pour l2. Le facteur d'échelle Hj est, quant-à lui, mémorisé dans une autre table T4 adressable à partir de Xj soit des n-1 bits suivant le bit de poids fort de D.

<u>Précision de l'algorithme lo ->l1 ->l2 et calcul de Hj</u> :

A/ Méthode itérative de Newton.

En utilisant les définitions présentées ci-dessus, l'inverse l peut s'exprimer de la façon suivante :

$$l = 1/D = 1/((Xj)+d) = (1/Xj) \times (1/(1 + d/Xj)) =$$

$$yj \times 1/(1 + d.yj) \qquad\qquad (1)$$

avec $d.yj < i.yj < 2^{-n} \times 2 << 1$

Par développement limité l s'exprime encore sous la forme:

$$l = yj (1 - d.yj + d^2.(yj)^2 - d^3.(yj)^3 \;....) \qquad\qquad (2)$$

$$I = yj \, (1 - (D-Xj).yj + d^2.(yj)^2 - d^3.(yj)^3 \, ....) \tag{3}$$

$$I = yj \, (2 - D.yj) + d^2.(yj)^3.(1 - d.yj + d^2.(yj)^2 \, ...) \tag{4}$$

Il est à noter que l'expression (4) fait apparaître l'erreur obtenue en utilisant la méthode de Newton avec $INo = 1/Xj$. L'erreur maximale EN est donnée par le terme $d^2.(yj)^3$ dont la valeur maximale dans l'invervalle $0,5; 1$ est donnée pour $yj = 2$ et $d = i$. Il en résulte $EN < 8i^2$, soit $IN < 2^{-(n-3)}$.

B/ Méthode d'approximation linéaire (calcul de I1).

Le calcul de I1 par approximation linéaire à partir de $Io = yj = 1/Xj$ peut s'exprimer de la façon suivante :

$$I1 = yj + ((y'j - yj) \times (d/i)) = Io + (Go \times d) \tag{5}$$

Dans cette expression, Io et Go sont donnés par les tables T1 et T2 tronqués et arrondis à $n + m + g$ bits. De plus, la valeur arrondie de $d = D - Xj - \varepsilon$ est obtenue par troncature de D à gauche de n bits et arrondi à $m + g$ bits. Il est à noter que les bits de poids fort de Go sont nuls, ce qui permet une certaine simplification et réduction de la table T2.
Par ailleurs, y'j peut s'écrire :

$$y'j = 1/((Xj) + i) = (1/Xj).( \, 1/(1 + (i/Xj)))=$$

$$yj.(1/(1+ i.yj)) \tag{6}$$

soit par développement limité ( $i.yj < 2^{-(n-1)}$ )

$$y'j = yj.(1 - i.yj + i^2.(yj)^2 - i^3.(yj)^3 \, ..) \tag{7}$$

L'expression (5) s'écrit alors :

$$I1 = yj \, (1 + (d/i).( \, Xj.y'j - 1))) \tag{8}$$

soit en utilisant l'expression (7) :

$$I1 = yj \, ( \, 1 + (d/i).( \, - i.yj + i^2.(yj)^2 \, ...) \tag{9}$$

$$I1 = yj \, (1 - d.yj + d.i.(yj)^2 - d.i^2.(yj)^3 + ...) \tag{10}$$

L'erreur EL résultant de la méthode d'approximation linéaire est donnée par:
$EL = (1/D) - I1$ où $1/D$ et I1 sont donnés par les expressions (2) et (10) respectivement, soit :

$$EL = yj.((1 - d.yj + d^2.(yj)^2 \, ...) - ( \, 1 - d.yj + i.d.(yj)^2 \, ...)$$

$$EL = (yj)^3.(d.(d - i)).(1 - d.yj + d^2.(yj)^2 \, -..) \tag{11}$$

avec $d.yj < 2^{-n} \times 2 << 1$
Par rapport à d l'erreur EL est maximale pour

EP 0 448 448 B1

$$d = i - d = i/2$$

soit $EL < (i^2/4).(yj)^3 < (8i^2)/4 = 2^{-(2n-1)} = ELMAX$

Il en résulte que pour une même précision de Io (table d'inverse adressée sur les n bits de poids fort de D) l'approximation linéaire donne une précision de 2n-1 bits significatifs, quatre fois supérieure à celle de la première itération de la méthode de Newton.

L'incertitude (valeur maximale de EL dans l'intervalle ij) est la plus forte au voisinage de $X = 0,5$ ($y = 2$) et la plus faible au voisinage de $X = 1$ ($y = 1$). La figure 2 montre en EL les courbes Cj de variation d'erreur (à partir de Io = yj) en fonction de X, l'erreur EL étant en fait toujours négative.

C/ Approximation pour correction complémentaire (calcul de I2).

En reprenant l'expression (11), celle-ci peut s'écrire de la façon suivante :

$$EL = (yj)^3.d.(d - i).(1 + f(d.yj)) \qquad (12)$$

$$\text{avec } f(d.yj) = - d.yj + d^2.(yj)^2 ...) \qquad (13)$$

Tant que f(d.yj) sera << 1, il y aura un coefficient de proportionnalité entre les courbes $Cj \simeq (yj)^3.d.(d - i)$ donnant EL en fonction d pour les intervalles ij et la méthode de correction proposée ci-dessus se révèlera correcte. Aussi est-il possible de conserver dans la table T3 une valeur de correction de base CBI en fonction de d (plus précisement de chaque valeur dl) et dans la table T4 un coefficient d'échelle Hj fonction de Xj.

L'intervalle de référence, utilisé pour la construction de la courbe de base CB, iB= Xjb, (Xjb)+i étant partagé en $2^m$ sous-intervalles, les m bits de poids fort de la valeur de d (c.à.d. les m bits suivants les n bits de poids fort de D) représentatifs de la valeur dl serviront à adresser la table T3.

L'erreur finale est celle due à l'approximation $f(d.yj) = c^{te}$ sur l'intervalle 0,5; 1 .

Posons

$$Hj = Cj/Cjb = ((yj)^3/(yjb)^3) \times (d.(d - i))/(d.(d - i)) \times (1 + fj(d))/(1 + fjb(d)) \text{ avec } d = i \qquad (14)$$

Pour que Hj soit indépendant de d et ne dépende que de yj il faut fj(d) sensiblement égal à fjb(d). Par ailleurs de l'expression (13) on peut écrire :

$$1 + f(d) = 1 - d.y + d^2.y^2 .... = 1/(1 + d.y) \qquad (15)$$

soit

$$Hj = ((yj)^3/(yjb)^3) \times ((1 + d.yjb)/(1 + d.yj)) =$$

$$Hj = K \times (yj/yjb)^3 \qquad (16)$$

soit

$$K = (1 + d.yjb)/(1 + d.yj) \simeq (1 + d.yjb) \times (1 - d.yj)$$

$$K \simeq 1 - (d.(yj - yjb)) \qquad (17)$$

- la limite supérieure de d égale i
- la limite supérieure de (yj - yjb) égale 1
- la limite supérieure de d.(yj - yjb) = i = $2^{-n}$ par rapport à l'unité pour le calcul de la correction, ce qui en association avec ELMAX = $2^{-(2n-1)}$ donne une précision de 3n-1 bits pour I2 obtenu avec application du coefficient de proportionalité Hj.

7

De l'expression (16) on peut donc écrire:

$$H_j = (y_j/y_{jb})^3 = (X_{jb}/X_j)^3$$

Par ailleurs, il existe une autre source d'erreur provenant de l'utilisation sur tout le sous-segment entourant d de largeur i x $2^{-m}$ de la valeur approchée constante égale à $C(X_{jl})$. L'erreur maximale résultante correspond au premier sous-segment (j=0 et l=0) de C0 0,5; $(0,5 + 2^{-m-n})$ et est égale à C0 $(0,5 + 2^{-m-n}) = 8 \times 2^{-m-n} \times 2^{-n} = 2^{-(2n+m-3)}$.

Il importe donc que la précision de la table T3 (2n+m-3) soit au moins du même ordre de grandeur que la précision (3n-1) obtenue par utilisation du coefficient de proportionalité. Ceci est vérifié pour m ≥ n+2.

Ainsi donc la correction complémentaire permet d'obtenir une précision supplémentaire de n bits quand m est choisi supérieur ou égal à n+2.

A titre d'exemple le procédé de calcul selon l'invention permet d'obtenir l'inverse d'une mantisse de 24 bits d'un nombre flottant court avec les valeurs n = 8 et m = 10, sans avoir recours au processus d'itération de la méthode de Newton. Dans ce cas, lo est obtenue de la table T1 avec n = 8 bits significatifs, l1 avec 2n-1 = 15 bits significatifs et l2 avec 3n-1 = 23 bits significatifs avant normalisation, soit une erreur possible sur le 24ème bit après normalisation.

Dans tout ce qui précède, il a toujours été fait référence à une erreur de signe constant, ici négative en partant de lo = 1/Xj, c'est à dire de l'extrémité inférieure Xj de l'intervalle ij considéré. Il est possible de réduire de moitié l'erreur maximale en valeur absolue en travaillant en erreur signée. Ainsi donc l'approximation linéaire permet d'obtenir 2n bits significatifs pour l1. La table T2 est modifiée légèrement pour accueillir un bit de signe. Ce bit de signe trouve cependant facilement une place dans T2 compte tenu du fait que les bits de poids fort des éléments Go de T2 sont nuls par construction.

Du point de vue géométrique la droite Dj(X) de la figure 3 correspondant à la corde YjY'j est translatée en DSj(X) verticalement vers le bas de la figure d'une valeur égale à IEMAXjl /2. Dans ce cas la valeur de départ de l'approximation linéaire sera lo = ISo(Xj) = (1/Xj) - IEMAXjl /2.

D'une façon semblable, les diverses courbes Cj sont transformées par translation verticale pour donner les courbes signées CSj représentées sur la figure 2. Dans cette configuration les axes médians des courbes CSj coïncident avec l'axe OX. Cette modification permet d'obtenir encore un bit significatif supplémentaire après correction complémentaire. En reprenant les valeurs données ci-dessus on arrive à 25 bits significatifs, ce qui peut être utilisé pour les calculs en flottant court. Avec les valeurs n = 9 et m = 11, on obtient avec utilisation d'une correction signée, Il avec 2n = 18 bits significatifs et l2 avec 3n+1 = 28 bits significatifs. Si la valeur de l2 est alors utilisée comme valeur de départ INo d'une itération selon la méthode de Newton, on obtient dès la première itération un résultat IN1 avec 56 bits significatifs, ce qui est suffisant pour le calcul de l'inverse d'un nombre en format flottant long (mantisse de 56 bits).

Mode de réalisation d'un dispositif de calcul d'inverse selon l'invention.

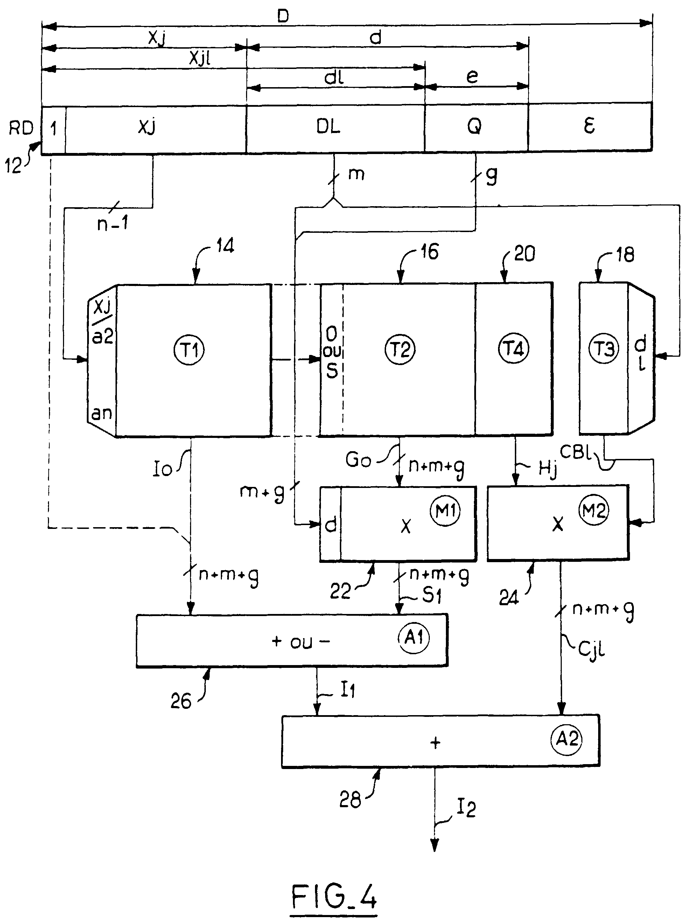

La figure 4 illustre le schéma d'un mode de réalisation d'un dispositif selon l'invention pour la mise en oeuvre du procédé exposé ci-dessus. Un tel dispositif est incorporé dans l'unité de traitement ou processeur d'un calculateur numérique binaire classique. Bien que non représenté à la figure 4, le dispositif est associé à un circuit de normalisation classique, utilisable tant pour les circuits traitant les nombres en format flottant que pour les circuits traitant les nombres en format fixe. En particulier, le circuit de normalisation en base 2 réalise les décalages nécessaires pour positionner le premier bit de valeur 1 du nombre dont on recherche l'inverse (ou de sa mantisse) comme premier bit de poids fort du nombre D et effectue les modifications correspondantes de l'exposant. Le résultat final du calcul d'inverse pourra être à nouveau normalisé dans le format adéquat à son utilisation ultérieure.

Le dispositif comporte donc un registre d'entrée RD (12) partagé en trois champs, le champ XJ constitué des n premiers bits de poids fort de D, le champ DL constitué des m bits suivants et le champ Q constitué des g bits de garde. Dans le cas où le format de D est supérieur au format de l2, les bits de poids faible de D ne sont pas utilisés pour l2 mais serviront pour l'itération de Newton finale.

Le dispositif selon l'invention est conçu pour être aisément intégrable en technologie VLSI. Il comporte en particulier quatre tables T1 à T4 réalisées sous forme de mémoires mortes programmables (PROM). En particulier, les tables T1 (14), T2 (16) et T4 (20) sont adressées à partir des n premiers bits de poids de D. En pratique, il est possible de réduire le nombre d'entrées de ces tables à $2^{n-1}$ en ne considérant que les bits de rang 2 à n de XJ.

La table d'inverse T1 délivre à sa sortie la valeur lo dont la dimension est supérieure à celle correspondant à la précision finale recherchée. Ainsi donc la table T1 présente une dimension de $((n+m+g) \times 2^{n-1})$.

La table d'écart T2 délivre une valeur de sortie Go, signée ou non, utilisée pour le calcul de l'approximation linéaire. Go est également de dimension supérieure à la précision recherchée, de sorte que la table T2 présente une dimension théorique de $((n+m+g) \times 2^{n-1})$. En pratique, les valeurs des écarts d'inverse rentrées dans T2 sont telles que les n premiers bits de poids fort de Go sont à zéro ou représentent le signe. Il est donc possible par construction de réduire la taille de T2 et de prévoir un circuit de sortie de T2 adapté pour reformater et recadrer Go conformément aux caractéristiques du format de D.

La table d'échelle T4 délivre à sa sortie la valeur du coefficient d'échelle Hj avec une dimension de l'ordre de n bits pour garantir la précision finale conformément à la présentation ci-dessus (voir les conclusions tirées de l'expression (17)). La table T4 a donc pour dimensions $(n \times 2^{n-1})$.

La table de correction T3 (18) est adressée à partir des m bits du champ DL et présente donc $2^m$ entrées. La table T3 délivre à sa sortie la valeur du coefficient de correction de base CBl avec une dimension voisine de n bits quand m est choisi supérieur ou égal à n+2.

Il est à noter que les tailles précises des tables sont définies pour chaque application à partir des valeurs de base données ci-dessus qui sont toutefois susceptibles d'être optimisées par simulation dans la mesure où il peut s'avérer intéressant de réduire le nombre de bits de garde. Dans certains cas le nombre g de bits de garde du champ Q de RD peut être différent de celui choisi pour les sorties Io, S1 et Cjl ( dans le cas présent les nombres de bits de bits de garde ont été choisis égaux à g par commodité).

Le dispositif selon l'invention comporte également deux circuits multiplieurs M1 (22) et M2 (24) et des moyens d'addition à trois entrées Io, S1 et Cjl, et à une sortie sont constitués par deux circuits additionneurs A1 (26) et A2 (28) agencés selon le schéma illustré à la figure 4. Toutefois sans sortir du cadre de l'invention les deux additionneurs A1 et A2 sont remplacés par un circuit additionneur unique à trois entrées (non représenté).

Le multiplieur M1 est utilisé pour calculer la correction à introduire dans le calcul de la valeur l1 par approximation linéaire. Les deux opérandes de M1 sont d'une part la valeur de sortie Go de T2 et les (m+g) bits de poids faible de D représentatifs du déplacement $d = D - Xj$ à ε près. Ici encore il est possible de ne travailler que sur les (m+g) bits de poids faible de Go, de telle sorte que le multiplieur M1 a pour taille ((m+g)x(m+g)). Avantageusement, ce multiplieur peut être celui des mantisses de l'opérateur de multiplication. La valeur de sortie S1 du multiplieur M1 est convenablement cadrée et tronquée sur n+m+g bits puis appliquée à l'une des deux entrées de l'additionneur A1. L'autre entrée de l'additionneur A1 reçoit la valeur Io délivrée par la table T1. Avantageusement, dans le cas où Go (et S1) est exprimée en valeur signée, l'additionneur A1 est choisi de type additionneur-soustracteur.

Le multiplieur M2 est utilisé pour calculer le coefficient de correction Cjl. Selon les indications données ci-dessus, la taille de ce multiplieur est modeste (n x n). Les deux opérandes de M2 sont constitués par la valeur de sortie Hj de la table T4 et d'autre par la valeur de sortie CBl de la table T3. Dans le cas où les valeurs mémorisées dans la table T3 sont signées, il en sera de même pour la valeur de sortie Cjl du multiplieur M2. Cette valeur de sortie Cjl est tronquée et cadrée sur n+m+g bits pour être convenablement chargée dans l'additionneur A2. L'additionneur A2 a donc pour opérande, d'une part Cjl, d'autre part l1 délivré par le multiplieur M1. L'additionneur A2, le cas échéant signé, délivrera en sortie la valeur l2 sur un format de n+m+g bits avec au maximum 3n-1 bits significatifs (ou au maximum 3n+1 bits significatifs en cas de calcul d'approximation signée).

Enfin le dispositif comporte les moyens matériels pour réaliser au moins une itération de Newton à partir de l2. Cette itération peut être réalisée par programmation pour réduire le nombre de circuits spécifiques. Dans ce cas, une opération de normalisation dans une autre base selon les spécificités du calculateur (par exemple en base 16) est effectuée sur la valeur de l2 en sortie de A2. Par contre cette opération n'est pas nécessaire dans le cas où l'itération de Newton est réalisée par des circuits spécifiques micro-programmés (cas illustré à la figure 1).

Il résulte de ce qui précède que l'invention permet le calcul d'inverse de mantisse de nombre flottant court sans recourir à la méthode de Newton (nécessitant un jeu complémentaire de multiplieurs de grande taille) au prix de tables additionnelles (T3 et T4) de taille modeste. De plus, dans le cas où le multiplieur principal M1 est constitué d'additionneurs agencés selon une structure dite d'arbre de Wallace, les additionneurs A1 et A2 sont facilement intégrables dans cette structure. Enfin, il est à noter que les deux multiplieurs M1 et M2 travaillent de façon indépendante et simultanée, ce qui est appréciable dans les calculateurs scientifiques pour la rapidité d'exécution de l'opération de division.

**Revendications**

1. Procédé pour approximer l'inverse I d'un nombre D, comportant les opérations suivantes:

   a) - Le cas échéant mise sous forme binaire et normalisation du nombre D,
   b) - Recherche, dans une table d'inverse T1 (14), a partir des n premiers bits de poids fort de D correspondants à une valeur d'entrée $Xj = 1/2 + (j \times 2^{-n})$ avec j entier de 0 à $2^{n-1}-1$ , d'une première approximation Io de l'inverse du nombre D,
   c) - Recherche, dans une table d'écart T2 (16), à partir de Xj, du gradient d'écart d'inverse $Go = \Delta\,Io/i$ dans l'intervalle ij= [(Xj), ((Xj)+i)] encadrant la valeur D, avec $i = 2^{-n}$,
   d) - Détermination, par approximation linéaire, d'une deuxième valeur l1 par mise en oeuvre de l'algorithme

I1 = Io + (d x Go) où les m bits suivant les n bits de poids fort de D correspondent à d = D - Xj et Go est rentré en valeur algébrique (22, 26),

caractérisé en ce qu'il comporte les opérations supplémentaires suivantes

e) - Recherche, dans une table de correction T3 (18), à partir de d, d'une valeur de correction de base CBI préétablie, signée ou non, représentative de l'écart E = I - I1 dans une intervalle de base iB= [(XjB), ((XjB)+i)] donnée,

f) - Recherche dans une table d'échelle T4 (20), d'un facteur d'échelle Hj à partir de Xj,

g) - Détermination d'une valeur de correction Cjl = CBI x Hj (24),

h) - Détermination d'une troisième approximation I2 = I1 + Cjl (28).

**2.** Procédé selon la revendication 1, caractérisé en ce qu'il comporte l'opération de mise en oeuvre de la méthode itérative de Newton dans laquelle la kième itération est donnée par l'algorithme:

$$INk = (IN(k - 1)) \times (2 - (D \times (IN(k-1)))) \text{ avec } INo = I2.$$

**3.** Procédé selon l'une des revendications précédentes, caractérisé en ce que le gradient d'écart d'inverse Go est négatif et est donné par la formule :

$$Go = (Io((Xj)+i) - Io(Xj)) / i.$$

**4.** Procédé selon l'une des revendications précédentes, caractérisé en ce que Io est donné par la formule Io = yj = 1/Xj.

**5.** Procédé selon l'une des revendications 1 à 3, caractérisé en ce que Io est donné par la formule ISo(Xj) = (1/Xj) - ( IEMAXjl /2) où IEMAXjl représente la valeur absolue de l'écart maximal entre la courbe Y(X) = 1/X et la corde Dj (X) de la courbe Y(X) dans l'intervalle ij = [(Xj), ((Xj)+i)].

**6.** Procédé selon l'une des revendications précédentes, carctérisé en ce que l'entrée de la table de correction T3 est réalisée à partir des m bits suivant les n bits de poids fort de D et en ce que $CB1 = I((Xjb)+(1 \times 2^{-m-n})) - I1((Xjb)+ (1 \times 2^{-m-n}))$ pour $(1 \times 2^{-m-n}) \leq d < ((1 + 1) \times 2^{-m-n}))$ avec 1 entier compris entre 0 et $2^m$-1.

**7.** Procédé selon l'une des revendications précédentes, caractérisé en ce que Hj est donné par la formule :

$$Hj = (Xjb/Xj)^3.$$

**8.** Procédé selon l'une des revendications précédentes, caractérisé en ce que les valeurs de n et m sont choisies pour calculer l'inverse d'un nombre avec N bits significatifs à l'approximation I2, par exemple N = 32.

**9.** Procédé selon l'une des revendications 2 à 7, caractérisé en ce que les valeurs de n et m sont choisies pour calculer l'inverse d'un nombre avec N' bits significatifs à l'issue d'une seule itération IN1 selon la méthode de Newton, par exemple N' = 64.

**10.** Procédé selon l'une des revendicatins précédentes, caractérisé en ce qu'il est utilisé pour calculer l'inverse de la mantisse d'un nombre codé en format flottant.

**11.** Calculateur numérique pour la mise en oeuvre du procédé selon l'une des revendications précédentes, comportant dans au moins un de ses processeurs:

- des moyens pour le mise en forme binaire et la normalisation du nombre D,
- une table d'inverse T1 (14) adressée en fonction des n bits de poids fort du nombre D et de sortie Io,
- une table de gradient d'écart T2 (16) adressée en fonction des n bits de poids fort du nombre D et de sortie Go,
- un circuit multiplieur M1 (22), de sortie S1 et dont l'entrée-multiplicateur reçoit au moins m bits suivant les n bits de poids fort de D et l'entrée-multiplicande reçoit Go; caractérisé en ce qu'il comporte dans ledit processeur:

- une table de correction T3 (18) adressée en fonction des m bits suivant les n bits de poids fort de D et de sortie CB1,
- une table d'échelle T4 (20) adressée en fonction des n bits de poids fort du nombre D et de sortie Hj,
- un second circuit multiplieur M2 (24) dont les entrées recoivent CBI et Hj et de sortie Cjl,
- des moyens d'addition A1 (26) et A2 (28) à trois entrées recevant Io, S1 et Cjl, et de sortie I2.

**12.** Calculateur selon la revendication 11, caractérisé en ce qu'il comporte des moyens matériels et logiciels pour réaliser par programmation une itération selon la méthode de Newton dans laquelle la Kième itération est donnée par l'algorithme:

$$INK = (IN(k-1))x(2- (D \text{ x } (IN(k-1)))) \text{ avec } INo = I2.$$

**13.** Calculateur selon l'une des revendications précédentes, caractérisé en ce que la table T2, le multiplieur M1 et les moyens d'addition A1, A2 travaillent sur des opérandes signés.

**14.** Calculateur selon l'une des revendications 11 à 13, caractérisé en ce que les dimensions de Io, Go, S1, I1 et I2 sont égales à $n + m + g$, avec $g{\geq}0$.

**15.** Calculateur selon l'une des revendications 11 à 13, caractérisé en ce que la table T3 comporte $2^m$ entrées avec $m \geq n+2$.

## Claims

**1.** Method for approximating the inverse I of a number D, comprising the following operations:

a) Where appropriate, putting the number D into binary form and normalising it,

b) Looking up in an inverse table T1 (14), on the basis on the first n most significant bits of D corresponding to an entry value $Xj = 1/2 + (j \text{ x } 2^{-n})$ with j an integer from 0 to $2^{n-1}-1$, a first approximation Io of the inverse of the number D,

c) Looking up in a deviation table T2 (16), on the basis of Xj, the inverse deviation gradient $Go = \Delta \text{ Io}/i$ in the interval $ij = [(Xj), ((Xj) + i)]$ framing the value D, with $i = 2^{-n}$,

d) Determining, by linear approximation, a second value I1 by using the algorithm $I1 = Io + (d \times Go)$ where the m bits following the n most significant bits of D correspond to $d = D - Xj$ and Go is re-entered as an algebraic value (22, 26),

characterised in that it comprises the following additional operations:

e) Looking up, in a correction table T3 (18), on the basis of d, a preestablished base correction value CB1, with or without a sign, representing the deviation $E = I - I1$ in a given base interval $iB = [(XjB), ((XjB) + i)]$,

f) Looking up in a scale table T4 (20), a scale factor Hj on the basis of Xj,

g) Determining a correction value $Cj1 = CB1 \text{ x } Hj$ (24),

h) Determining a third approximation $I2 = I1 + Cj1$ (28).

**2.** Method according to Claim 1, characterised in that it comprises the operation of using Newton's iterative method in which the kth iteration is given by the algorithm:

$$INk = (IN(k - 1)) \times (2 - (D \times (IN(k-1)))) \text{ with } INo = I2.$$

**3.** Method according to one of the preceding claims, characterised in that the inverse deviation gradient Go is negative and is given by the formula:

$$Go = (lo((Xj) + i) - lo(Xj)) / i.$$

4. Method according to one of the preceding claims, characterised in that lo is given by the formula lo = $yj = 1/Xj$.

5. Method according to one of Claims 1 to 3, characterised in that lo is given by the formula $ISo(Xj) = (1/Xj) - (IEMAXjl / 2)$ where IEMAXjl represents the absolute value of the maximum deviation between the curve $Y(X) = 1/X$ and the chord $Dj(X)$ of the curve $Y(X)$ in the interval $ij = [(Xj), ((Xj) + i)]$.

6. Method according to one of the preceding claims, characterised in that the entry of the correction table T3 is made on the basis of the m bits following the n most significant bits of D and in that $CB1 = l((Xjb) + (1 \times 2^{-m-n})) - l1((Xjb) + (1 \times 2^{-m-n}))$ for $(1 \times 2^{-m-n}) \leq d < ((1 + 1) \times 2^{-m-n}))$ with 1 an integer comprised between 0 and $2^m-1$.

7. Method according to one of the preceding claims, characterised in that Hj is given by the formula:

$$Hj = (Xjb / Xj)^3.$$

8. Method according to one of the preceding claims, characterised in that the values of n and m are chosen in order to calculate the inverse of a number with N significant bits to the approximation 12, for example N = 32.

9. Method according to one of Claims 2 to 7, characterised in that the values of n and m are chosen in order to calculate the inverse of a number with N' significant bits at the end of a single iteration IN1 according to Newton's method, for example N' = 64.

10. Method according to one of the preceding claims, characterised in that it is used to calculate the inverse of the mantissa of a number coded in floating format.

11. Digital calculator for using the method according to one of the preceding claims, comprising in at least one of its processors:

- means for putting the number D into binary form and normalising it,

- an inverse table T1 (14), addressed as a function of the n most significant bits of the number D and with an output lo,

- a deviation gradient table T2 (16), addressed as a function of the n most significant bits of the number D and with an output Go,

- a multiplier circuit M1 (22), with an output S1, and the multiplier input of which receives at least m bits following the n most significant bits of D and the multiplicand input receives Go;

characterised in that it comprises, in said processor:

- a correction table T3 (18), addressed as a function of the m bits following the n most significant bits of D and with an output CB1,

- a scale table T4 (20) addressed as a function of the n most significant bits of D and with an output Hj,

- a second multiplier circuit M2 (24), the inputs of which receive CB1 and Hj and with an output Cj1,

- addition means A1 (26) and A2 (28) with three inputs receiving lo, S1 and Cj1, and with an output I2.

12. Calculator according to Claim 11, characterised in that it comprises hardware and software means for performing, by programming, an iteration by Newton's method in which the kth iteration is given by the algorithm:

$$INk = (IN(k - 1)) \times (2 - (D \times (IN(k-1)))) \text{ with } INo = I2.$$

13. Calculator according to one of the preceding claims, characterised in that the table T2, the multiplier M1 and the addition means A1, A2 work on signed operands.

14. Calculator according to one of Claims 11 to 13, characterised in that the dimensions of Io, Go, S1, I1 and I2 are equal to $n + m + g$, with $g \geq 0$.

15. Calculator according to one of Claims 11 to 13, characterised in that the table T3 contains $2^m$ entries with $m \geq n + 2$.

**Patentansprüche**

1. Verfahren zum Approximieren der Inversen I einer Zahl D, mit den folgenden Operationen:

   a) - falls erforderlich, Umsetzen in Binärform und Normieren der Zahl D,
   b) - ausgehend von den n ersten höherwertigen Bits von D, die einem Eingangswert $Xj = 1/2 + (j \cdot 2^{-n})$ mit j ganze Zahl von 0 bis $2^{n-1} - 1$ entsprechen, Suchen einer ersten Approximation Io der Inversen der Zahl D in einer Inversen-Tabelle T1 (14),
   c) - ausgehend von Xj Suchen des Abstandsgradienten $Go = \Delta Io/i$ der Inversen im Intervall $ij = [(Xj), ((Xj) + i)]$, das den Wert D umgibt, mit $i = 2^{-n}$, in einer Abstandstabelle T2 (16),
   d) - Bestimmen mittels linearer Approximation eines zweiten Werts I1 durch Ausführen des Algorithmus $I1 = Io + (d \cdot Go)$, wobei die m Bits, die den n höherwertigen Bits von D folgen, $d = D - Xj$ entsprechen und Go als algebraischer Wert (22, 26) eingegeben wird,

   dadurch gekennzeichnet, daß es die folgenden zusätzlichen Operationen enthält:

   e) - ausgehend von d Suchen eines im voraus erstellten Basiskorrekturwerts CB1 mit oder ohne Vorzeichen, der den Abstand $E = I - I1$ in einem gegebenen Basisintervall $iB = [(XjB), ((XjB) + i]$ repräsentiert, in einer Korrekturtabelle T3 (18),
   f) - Suchen eines Skalierungsfaktors Hj ausgehend von Xj in einer Skalierungstabelle T4 (20),
   g) - Bestimmen eines Korrekturwerts $Cj1 = CB1 \cdot Hj$ (24),
   h) - Bestimmen einer dritten Approximation $I2 = I1 + Cjl$ (28).

2. Verfahren nach Anspruch 1, dadurch gekennzeichnet, daß es die Operation des Ausführens des Newtonschen Iterationsverfahrens enthält, in dem die k-te Iteration durch den folgenden Algorithmus gegeben ist:

$$INk = (IN(k - 1)) \cdot (2 - (D \cdot (IN(k - 1)))),$$

mit $INo = I2$.

3. Verfahren nach einem der vorangehenden Ansprüche, dadurch gekennzeichnet, daß der Abstandsgradient Go der Inversen negativ ist und durch die folgende Formel gegeben ist: $Go = (Io((Xj) + i) - Io(Xj))/i$.

4. Verfahren nach einem der vorangehenden Ansprüche, dadurch gekennzeichnet, daß Io durch die Formel Io = yj = 1/Xj gegeben ist.

5. Verfahren nach einem der Ansprüche 1 bis 3, dadurch gekennzeichnet, daß Io gegeben ist durch die Formel $ISo (Xj) = (1/Xj) - (IEMAXjI/2)$, wobei IEMAXjI den Absolutwert des maximalen Abstands zwischen der Kurve $Y(X) = 1/X$ und der Sehne Dj (X) der Kurve Y(X) im Intervall $ij = [(Xj), ((Xj) + i)]$ repräsentiert.

6. Verfahren nach einem der vorangehenden Ansprüche, dadurch gekennzeichnet, daß der Eingang der Korrekturtabelle T3 anhand der m Bits verwirklicht wird, die den n höherwertigen Bits von D folgen, und daß

$$CB1 = I((Xjb) + (1 \cdot 2^{-m-n})) - I1((Xjb) + (1 \cdot 2^{-m-n}))$$

für $(1 \cdot 2^{-m-n}) \leq d < ((1 + 1) \cdot 2^{-m-n}))$
mit 1 ganze Zahl zwischen 0 und $2^m - 1$.

7. Verfahren nach einem der vorangehenden Ansprüche, dadurch gekennzeichnet, daß Hj gegeben ist durch die Formel: $Hj = (Xjb/Xj)^3$.

8. Verfahren nach irgendeinem der vorangehenden Ansprüche, dadurch gekennzeichnet, daß die Werte von n und m gewählt werden, um die Inverse einer Zahl, die N für die Approximation I2 signifikante Bits enthält, beispielsweise N = 32, zu berechnen.

9. Verfahren nach einem der Ansprüche 2 bis 7, dadurch gekennzeichnet, daß die Werte von n und m gewählt werden, um die Inverse einer Zahl, die N' bei der Ausgabe einer einzigen Iteration IN1 gemäß dem Newtonschen Verfahren signifikante Bits enthält, beispielsweise N' = 64, zu berechnen.

10. Verfahren nach einem der vorangehenden Ansprüche, dadurch gekennzeichnet, daß es für die Berechnung der Inversen der Mantisse einer im Gleitkommaformat codierten Zahl verwendet wird.

11. Digitaler Rechner für die Ausführung des Verfahrens nach einem der vorangehenden Ansprüche, der in wenigstens einem seiner Prozessoren enthält:

   - Mittel zum binären Umsetzen und zum Normieren der Zahl D,
   - eine Inversen-Tabelle T1 (14), die in Abhängigkeit von den n höherwertigen Bits der Zahl D und vom Ausgang Io adressiert wird,
   - eine Abstandsgradiententabelle T2 (16), die in Abhängigkeit von den n höherwertigen Bits der Zahl D und vom Ausgang Go adressiert wird,
   - eine Multipliziererschaltung M1 (22) mit Ausgang S1, deren Multiplikatoreingang wenigstens m Bits empfängt, die den n höherwertigen Bits von D folgen, und dessen Multiplikandeneingang Go empfängt;

   dadurch gekennzeichnet, daß er in diesem Prozessor enthält:

   - eine Korrekturtabelle T3 (18), die in Abhängigkeit von den m Bits, die den n höherwertigen Bits von D folgen, und vom Ausgang CB1 adressiert wird,
   - eine Skalierungstabelle T4 (20), die in Abhängigkeit von den n höherwertigen Bits der Zahl D und vom Ausgang Hj adressiert wird,
   - eine zweite Multiplikationsschaltung M2 (24), deren Eingänge CB1 und Hj empfangen und die einen Ausgang Cjl besitzt,
   - Additionsmittel A1 (26) und A2 (28) mit drei Eingängen, die Io, S1 und Cj1 empfangen, und mit einem Ausgang I2.

12. Rechner nach Anspruch 11, dadurch gekennzeichnet, daß er Hardware- und Software-Mittel für die Ausführung einer Iteration gemäß dem Newtonschen Verfahren durch Programmierung enthält, wobei die k-te Iteration durch den folgenden Algorithmus gegeben ist:

$$INk = (IN(k - 1)) \cdot (2 - (D \cdot (IN(k - 1))))$$

   mit $INo = I2$.

13. Rechner nach einem der vorangehenden Ansprüche, dadurch gekennzeichnet, daß die Tabelle T2, der Multiplizierer M1 und die Additionsmittel A1, A2 an mit Vorzeichen behafteten Operanden arbeiten.

14. Rechner nach einem der Ansprüche 11 bis 13, dadurch gekennzeichnet, daß die Dimensionen von Io, Go, S1, I1 und I2 gleich $n + m + g$ sind, mit $g \geq 0$.

15. Rechner nach einem der Ansprüche 11 bis 13, dadurch gekennzeichnet, daß die Tabelle T3 $2^m$ Eingänge enthält, mit $m \geq n + 2$.

a) | NORMALISATION D

b) | Io

c) | Go          d = D - Xj

f) | Hj

e) | CBL

d1) | d × Go

g) | Cjl = Hj × CBL

d2) | I1 = Io + (d × Go)

h) | I2 = I1 + Cjl

I2

INo = I2

IT. NEWTON

IN1

$$\underline{FIG.1}$$

FIG_2

FIG. 3

FIG_4